# EUROPÄISCHE PATENTSCHRIFT

(11) **EP 2 817 205 B1**
(45) Veröffentlichungstag und Bekanntmachung des Hinweises auf die Patenterteilung: **27.07.2016**
(21) Anmeldenummer: 13727509.5
(22) Anmeldetag: 20.02.2013
(51) Int. Cl.: B62M 3/08

(54) **FLACHES FAHRRADPEDAL**
FLAT BICYCLE PEDAL
PÉDALE DE BICYCLETTE PLATE

(30) Priorität: 24.02.2012 DE 102012004011; 24.02.2012 DE 202012002085 U
(43) Veröffentlichungstag der Anmeldung: 31.12.2014
(73) Patentinhaber: Barjesteh, Ali, 10999 Berlin (DE)
(72) Erfinder: Barjesteh, Ali, 10999 Berlin (DE)
(74) Vertreter: Schulz Junghans Patentanwälte PartGmbB
(86) Internationale Anmeldenummer: PCT/DE2013/000101
(87) Internationale Veröffentlichungsnummer: WO 2013/123930

(56) Entgegenhaltungen:
- DE-A1-102007 034 882
- FR-A1- 2 778 887
- GB-A- 190 900 808
- US-A1- 2009 078 081

## Beschreibung

Die Erfindung betrifft ein flaches Fahrradpedal insbesondere für BMX-Fahrräder.

Ein solches Fahrradpedal, gemäß dem Oberbegriff des Anspruchs 1, ist aus der US 2009/078081 A1 bekannt.

Das flache Fahrradpedal besteht aus zwei miteinander verbundenen Halbschalen und einer Pedalachse, wobei je die Halbschale aus einer Trittplatte und einer mit der jeweiligen Trittplatte fest verbundenen Struktur besteht, wobei die Strukturen im montierten Zustand aufeinanderliegen, jede der Halbschalen in der Struktur eine Gleitlagerhalbschale für die Pedalachse aufweist und in jeder Gleitlagerhalbschale eine halbkreisförmige Nut zur Aufnahme von einem Ringsteg der Pedalachse angeordnet ist.

Ein weiteres flaches Fahrradpedal wird in der DE 10 2007 034882 A1 beschrieben und besteht aus einer vollflächigen Tritt- und einer vollflächigen Gegenplatte, die identisch ausgebildet sind, so dass je nach Stellung des Pedals die Trittplatte auch Gegenplatte sein kann und umgekehrt. Zwischen der Trittplatte und der Gegenplatte ist ein den Abstand zwischen der Trittplatte und der Gegenplatte gewähr-. leitender Distanzkörper angeordnet, der eine Bohrung zur Aufnahme einer Lagereinheit für die Pedalachse aufweist, wobei der verbleibende Materialsteg zwischen der Bohrung und der Außenfläche des Distanzkörpers im Bereich von Tritt- und Gegenplatte gegen Null geht, so dass die Kraftübertragung von der Trittplatte nahezu direkt auf die Lagereinheit erfolgt. Die Verbindung von Tritt- und Gegenplatte erfolgt durch mindestens zwei Verbindungselemente die jeweils beidseitig der Lagereinheit angeordnet sind und die die Fixierung der Lagereinheit gewährleisten.

Aufgabe der Erfindung ist es, dieses Lösungsprinzip fortzuführen, zu verbessern und eine Gewichtsreduktion zu erreichen.

Gelöst wird diese Aufgabe mit den Merkmalen des Anspruches 1, vorteilhafte Ausgestaltungen sind Gegenstand der Unteransprüche.

Für ein flaches Fahrradpedal aus zwei miteinander verbundenen Halbschalen und einer Pedalachse wird erfindungsgemäß vorgeschlagen, dass jede Halbschale aus einer Trittplatte und einer mit der jeweiligen Trittplatte fest verbundenen wabenartigen Struktur besteht, wobei die wabenartigen Strukturen im montierten Zustand aufeinanderliegen, jede der Halbschalen in der wabenartigen Struktur eine Gleitlagerhalbschale für die Pedalachse aufweist und in jeder Gleitlagerhalbschale mindestens zwei halbkreisförmige Nute zur Aufnahme von Ringstegen der Pedalachse angeordnet sind.

Dabei sollte die Dicke der Gleitlagerhalbschalen am Scheitelpunkt zur Trittplatte kleiner 3 mm sein, so dass die Pedaldicke im Wesentlichen von der Stärke der Trittplatten und dem Durchmesser der Pedalachse bestimmt wird.
Die Flächenlast der Trittplatte wird so optimal auf die Pedalachse übertragen, und in Pedalachsenlängsrichtung wirkende Kräfte werden durch die Ringnut-Ringsteg-Paarungen aufgenommen.

In einer vorteilhaften Ausführung ist vorgesehen, dass die Anzahl der Ringstege der Pedalachse kleiner ist als die Anzahl der beim Zusammenfügen der Gleitlagerhalbschalen entstehenden Ringnute. So kann die Pedalachse in unterschiedlichen Positionen im Pedal angeordnet werden, d.h. der Abstand zwischen dem Pedal und der Tretkurbel ist veränderbar.

Im Sinne der Ausbildung des Fahrradpedals als flachen Körper ist bei einer weiteren vorteilhaften Ausführung vorgesehen, dass der Durchmesser der Ringstege der Pedalachse kleiner oder gleich dem Durchmesser der Pedalachse oder kleiner oder gleich dem Abstand zwischen den Trittplatten ist.

Die Ringstege sind bei einer bevorzugten Ausführung aus der Pedalachse herausgeformt.

Natürlich ist es auch möglich, dass mindestens ein Ringsteg, vorzugsweise der äußere Ringsteg, durch ein fest mit der Pedalachse verbundenes Kugellager gebildet ist.

In einer bevorzugten Ausführung sind die Gleitlagerhalbschalen pedalaußenseitig geschlossen und die Ringstege der Pedalachse sind auf dem im Pedal liegenden Endbereich der Pedalachse angeordnet.

Weiter hat es sich als vorteilhaft erwiesen, wenn die Gleitlagerhalbschalen im Austrittsbereich der Pedalachse aus dem Pedal eine nutförmige Vertiefung zur Aufgabe eines Dichtungsringes aufweisen. Die Gleitpaarung zwischen der Pedalachse und den Gleitlagerhalbschalen ist so gut vor Schmutz und Feuchtigkeit geschützt.

Die Gleitlagerhalbschalen können aus einem von der wabenartigen Struktur verschiedenen Lagermaterial hergestellt sein oder aus dem gleichen Material aber mit einer zusätzlichen Lagerbeschichtung.

Die wabenartige Struktur besteht bevorzugt aus aneinander liegenden Körpern mit einem vorzugsweise 6-eckigen Querschnitt. Die die wabenartige Struktur bildenden Körper sind mindestens teilweise als Hohlkörper ausgeführt. Benachbarte Körper können dabei gemeinsame Trennwände aufweisen. Vollkörper enthalten die notwendigen Bohrungen für die Verbindungselemente zwischen den Halbschalen. Dabei handelt es sich bevorzugt um Schraubverbindungen.

Neben den genannten, einen 6-eckigen Querschnitt aufweisenden und die wabenartige Struktur bildenden Körpern, können die Körper auch Kegelstümpfe, Pyramidenstümpfe, oder Zylinder oder Kombinationen daraus sein.

Bei einer weiteren vorteilhaften Ausgestaltung ist vorgesehen, dass die zusammengesetzten Halbschalen von einem umlaufenden Kantenschutz eingefasst sind, wobei dieser eine Öffnung für die Pedalachse aufweist, vorzugsweise einen Schlitz. Beidseitig des Schlitzes lassen sich dann Befestigungszapfen anordnen, die in Ausnehmungen der wabenartigen Struktur eingreifen.

Der Kantenschutz ist bei einer weiteren Ausführung direkt an die wabenartige Struktur angeformt und vorzugsweise aus dem gleichen Material wie diese ist.

Weiter ist vorgesehen, dass bei einer vorteilhaften Ausführung die zu einem Pedal zusammenfügbaren Halbschalen zueinander einen Lageversatz aufweisen, so dass die Mantellinie des Pedals nach der Montage in einer senkrechten Ebene zur Pedalachse im wesentlichen parallelogrammförmig verläuft.

Der Kantenschutz besitzt dann eine innwandige Struktur, durch die die bei der Montage entstehenden Absätze zwischen den wabenartigen Strukturen der versetzt angeordneten Trittplatten ausgleichbar sind.

Der Kantenschutz kann auch die Trittplatten zumindest abschnittsweise überragen, was die Abrutschgefahr minimiert.

Eine weitere Ausgestaltung sieht vor, dass das Fahrradpedal fluchtende Durchbrüche durch die Halbschalen aufweist, vorzugsweise einen auf jeder Pedalachsenseite, so dass Verschmutzungen des Pedals durch dieses hindurchtreten können.

Ausführungsbeispiele und Details sind in den Zeichnungen dargestellt. Es zeigen:
- Fig. 1: das Pedal mit Pedalachse,
- Fig. 2: eine Halbschale mit Pedalachse,
- Fig. 3: eine Halbschale mit Gleitlagerhalbschale und
- Fig. 4: einen Kantenschutz.

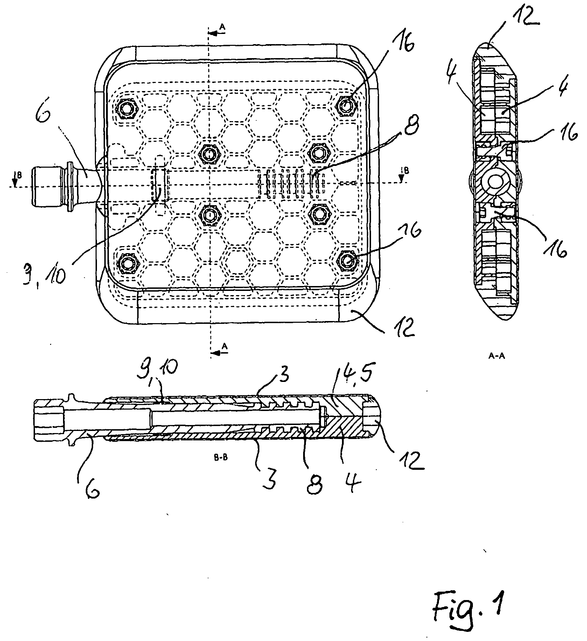

**Fig. 1** zeigt ein Pedal mit Pedalachse 6 in einer Draufsicht und in zwei Schnitten.
Das Fahrradpedal besteht aus zwei miteinander verbundenen Halbschalen 1, 2 und einer Pedalachse 6, wobei jede Halbschale 1, 2 aus einer Trittplatte 3 und einer mit der jeweiligen Trittplatte 3 fest verbundenen wabenartigen Struktur 4 besteht, wobei die wabenartigen Strukturen 4 im montierten Zustand aufeinanderliegen.

Die beiden Halbschalen 1, 2 sind durch Befestigungsschrauben 16 miteinander verbunden. Jede der Halbschalen 1, 2 weist in der wabenartigen Struktur 4 eine Gleitlagerhalbschale 5 für die Pedalachse 6 auf und in jeder Gleitlagerhalbschale 5 sind vier halbkreisförmige Nute 7 zur Aufnahme von vier Ringstegen 8 der Pedalachse 6 angeordnet. In jede Ringnut 7 greift bei dieser Ausführung somit ein Ringsteg 8 der Pedalachse 6. Die Ringstege 8 der Pedalachse 6 sind auf dem im Pedal liegenden Endbereich der Pedalachse 6 angeordnet.

Wird die Anzahl der Ringstege 8 der Pedalachse 6 kleiner der Anzahl der beim Zusammenfügen der Gleitlagerhalbschalen 5 entstehenden Ringnute 7 gewählt, lässt sich die Pedalachse 6 gegenüber der dargestellten Lage etwas weiter aus dem Pedal herausragend anordnen.

Die Dicke der Gleitlagerhalbschalen 5 am Scheitelpunkt (S) zur Trittplatte 3 ist kleiner als 3 mm.
Weiter wird gezeigt, dass die Gleitlagerhalbschalen 5 im Austrittsbereich der Pedalachse 6 aus dem Pedal eine nutförmige Vertiefung 9 zur Aufnahme eines Dichtungsringes 10 aufweisen. Dieser kann auch aus zwei Halbschalen bestehen.

Im Schnitt AA ist erkennbar, dass die Gleitlagerhalbschalen 5 der zu einem Pedal zusammengefügten Halbschalen 1, 2 zueinander einen Lageversatz in der wabenartigen Struktur 4 aufweisen, so dass das die Mantellinie des Pedals nach der Montage in einer senkrechten Ebene zur Pedalachse 6 parallelogrammförmig verläuft. Der umlaufende Kantenschutz 12 besitzt deshalb eine innwandige Struktur, durch die die bei der Montage entstehenden Absätze zwischen den wabenartigen Strukturen 4 der versetzt angeordneten Trittplatten 3 ausgeglichen werden.

Das dargestellte Pedal hat in der konkreten Ausführung eine Dicke von 14,5 mm.

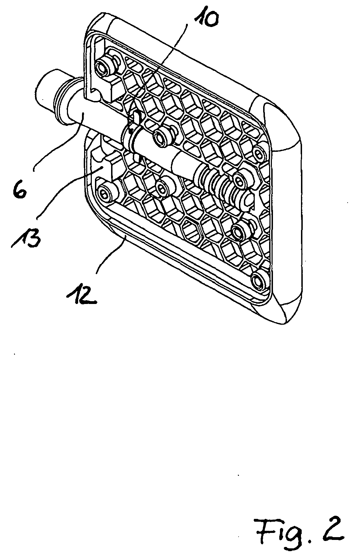

**Fig. 2** zeigt eine Halbschale 1 mit Pedalachse 6 und Kantenschutz 12. Die Pedalachse 6 ist im Endabschnitt mit den Ringstegen 8 versehen, wobei der Durchmesser der Ringstege 8 der Pedalachse 6 kleiner oder gleich dem Durchmesser der Pedalachse 6 oder kleiner oder gleich dem Abstand zwischen den Trittplatten 3 gewählt ist.

Auf der Trittplatte 3 und mit dieser fest verbundenen, befindet sich die wabenartigen Struktur 4, in der die Gleitlagerhalbschale 5 für die Pedalachse 6 ausgebildet ist.

Die Gleitlagerhalbschale 5 ist pedalaußenseitig geschlossen.

Die wabenartige Struktur 4 besteht aus aneinander liegenden Körpern 11 mit einem vorzugsweise 6-eckigen Querschnitt. Bis auf die Körper 11, die zur Aufnahme der Befestigungsschrauben 16 dienen, sind die Körper 11 als Hohlkörper ausgebildet.

Weiter ist gezeigt, dass der umlaufende Kantenschutz 12 eine Öffnung für die Pedalachse 6 aufweist, vorzugsweise einen Schlitz 15. Der Kantenschutz 12 weist beidseitig des Schlitzes 15 Befestigungszapfen 13 auf, die in Ausnehmungen 14 der wabenartigen Struktur 4 eingreifen.

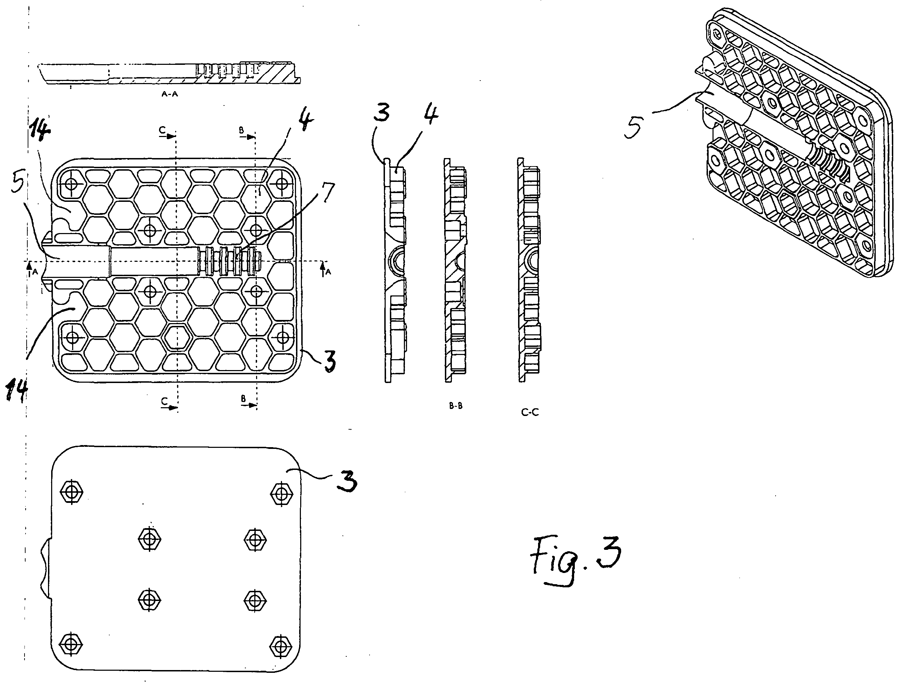

**Fig. 3** zeigt eine Halbschale 1 in mehreren Ansichten und Schnitten ohne Pedalachse 6. Auf der Trittplatte 3 und mit dieser fest verbundenen befindet sich die wabenartigen Struktur 4 aus Körpern 11 mit im wesentlichen sechseckigem Querschnitt. In der wabenartigen Struktur 4 ist die Gleitlagerhalbschale 5 mit vier Nuten angeordnet. Die Gleitlagerhalbschale 5 ist pedalaußenseitig geschlossen und überragt die Außenkante des Pedals im Bereich des Ausganges für die Pedalachse 6 sogar etwas. Zusammen mit dem Kantenschutz 12 wird so eine ästhetisch anspruchsvolle Lösung geschaffen. Gut erkennbar sind auch die Ausnehmungen 14 in der Wabenstruktur 4 zur Aufnahme der Befestigungszapfen 13 des Kantenschutzes 12. Die Befestigungszapfen 13 hintergreifen die äußere Kante der Ausnehmungen 14 und sorgen so für eine hohe Festigkeit.

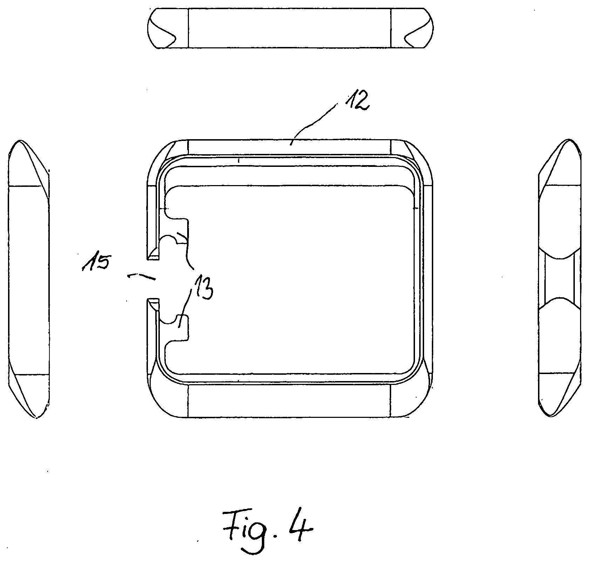

**Fig. 4** zeigt in einer Detailansicht nochmals den Kantenschutz 12 mit dem Schlitz 15 zum Durchgang der Pedalachse und den Befestigungszapfen 13.

### Bezugszeichenliste

- 1: Halbschale
- 2: Halbschale
- 3: Trittplatte
- 4: wabenartige Struktur
- 5: Gleitlagerhalbschale
- 6: Pedalachse
- 7: Nute der Gleitlagerhalbschale
- 8: Ringstege der Pedalachse
- 9: nutförmige Vertiefung der Gleitlagerhalbschale
- 10: Dichtungsring
- 11: Körper der Wabenstruktur
- 12: Kantenschutz
- 13: Befestigungszapfen des Kantenschutzes
- 14: Ausnehmungen in der Wabenstruktur
- 15: Schlitz des Kantenschutzes
- 16: Befestigungsschrauben

## Patentansprüche

1. Flaches Fahrradpedal aus zwei miteinander verbundenen Halbschalen (1, 2) und einer Pedalachse (6), wobei jede Halbschale (1, 2) aus einer Trittplatte (3) und einer mit der jeweiligen Trittplatte (3) fest verbundenen Struktur (4) besteht, wobei die Strukturen (4) im montierten Zustand aufeinanderliegen, jede der Halbschalen (1, 2) in der Struktur (4) eine Gleitlagerhalbschale (5) für die Pedalachse (6) aufweist und in jeder Gleitlagerhalbschale (5) eine halbkreisförmige Nut (7) zur Aufnahme einem Ringsteg (8) der Pedalachse (6) angeordnet sind, **dadurch gekennzeichnet, dass**
die Struktur (4) wabenartig ausgebildet ist und in jeder Gleitlagerhalbschale (5) mindesten zwei halbkreisförmige Nute (7) zur Aufnahme von Ringstegen (8) der Pedalachse (6) angeordnet sind.

2. Flaches Fahrradpedal nach Anspruch 1, **dadurch gekennzeichnet, dass** die Dicke der Gleitlagerhalbschalen (5) am Scheitelpunkt zur Trittplatte (3) kleiner 3 mm ist.

3. Flaches Fahrradpedal nach Anspruch 1 oder 2, **dadurch gekennzeichnet, dass** die Anzahl der Ringstege (8) der Pedalachse (6) kleiner oder gleich der Anzahl der beim Zusammenfügen der Gleitlagerhalbschalen (5) entstehenden Ringnute (7) ist.

4. Flaches Fahrradpedal nach einem der Ansprüche 1 bis 3, **dadurch gekennzeichnet, dass** die Gleitlagerhalbschalen (5) pedalaußenseitig geschlossen sind.

5. Flaches Fahrradpedal nach einem der Ansprüche 1 bis 4, **dadurch gekennzeichnet, dass** die Gleitlagerhalbschalen (5) aus einem von der wabenartigen Struktur (4) verschiedenen Lagermaterial hergestellt sind oder aus dem gleichen Material aber mit einer zusätzlichen Lagerbeschichtung.

6. Flaches Fahrradpedal nach einem der Ansprüche 1 bis 5, **dadurch gekennzeichnet, dass** der Durchmesser der Ringstege (8) der Pedalachse (6) kleiner oder gleich dem Durchmesser der Pedalachse (6) oder kleiner oder gleich dem Abstand zwischen den Trittplatten (3) ist.

7. Flaches Fahrradpedal nach einem der Ansprüche 1 bis 6, **dadurch gekennzeichnet, dass** die Ringstege (8) der Pedalachse (6) auf dem im Pedal liegenden Endbereich der Pedalachse (6) angeordnet sind.

8. Flaches Fahrradpedal nach einem der Ansprüche 1 bis 7, **dadurch gekennzeichnet, dass** mindestens ein Ringsteg (8), vorzugsweise der äußere Ringsteg, durch ein fest mit der Pedalachse (6) verbundenes Kugellager gebildet ist.

9. Flaches Fahrradpedal nach einem der Ansprüche 1 bis 8, **dadurch gekennzeichnet, dass** die Gleitlagerhalbschalen (5) im Austrittsbereich der Pedalachse (6) aus dem Pedal eine nutförmige Vertiefung (9) zur Aufnahme eines Dichtungsringes (10) aufweisen.

10. Flaches Fahrradpedal nach einem der Ansprüche 1 bis 9, **dadurch gekennzeichnet, dass** die wabenartige Struktur (4) aus aneinander liegenden Körpern (11) mit einem vorzugsweise 6-eckigen Querschnitt gebildet ist.

11. Flaches Fahrradpedal nach einem der Ansprüche 1 bis 9, **dadurch gekennzeichnet, dass** die die wabenartige Struktur (4) bildenden Körper (11) Kegelstümpfe, Pyramidenstümpfe oder Zylinder sind.

12. Flaches Fahrradpedal nach einern der Ansprüche 1 bis 11, **dadurch gekennzeichnet, dass** die die wabenartige Struktur (4) bildenden Körper (11) mindestens teilweise Hohlkörper sind.

13. Flaches Fahrradpedal nach einern der Ansprüche 1 bis 12, **dadurch gekennzeichnet, dass** die zusammengesetzten Halbschalen (1, 2) von einern umlaufenden Kantenschutz (12) eingefasst sind, wobei dieser eine Öffnung für die Pedalachse (6) aufweist, vorzugsweise einen Schlitz (15).

14. Flaches Fahrradpedal nach einem der Ansprüche 1 bis 13, **dadurch gekennzeichnet, dass** die zu einem Pedal zusammenfügbaren Halbschalen (1, 2) zueinander einen Lageversatz aufweisen, so dass das die Mantellinie des Pedals nach der Montage in einer senkrechten Ebene zur Pedalachse (6) parallelogrammförmig verläuft.

15. Flaches Fahrradpedal nach einem der Ansprüche 1 bis 14, **dadurch gekennzeichnet, dass** das Fahrradpedal fluchtende Durchbrüche durch die Halbschalen (1, 2) aufweist, vorzugsweise einen auf jeder Pedalachsenseite.

## Claims

1. A flat bicycle pedal consisting of two interconnected half shells (1,2) and a pedal pivot shaft (6), wherein each half shell (1,2) consists of a tread plate (3) and a structure (4), which is rigidly connected to the respective tread plate (3), wherein the structures (4) lie on top of each other in the assembled state, and wherein each of the half shells (1,2) comprises in the structure (4) a slide bearing half shell (5) for the pedal pivot shaft (6), and wherein a semicircular groove (7) for receiving an annular projection (8) of the pedal pivot shaft (6) is positioned in each slide bearing half shell (5),
**characterized in that**
the structure (4) is honeycomb-shaped and at least two semicircular grooves (7) for receiving annular projections (8) of the pedal pivot shaft (6) are positioned in each slide bearing half shell (5).

2. The flat bicycle pedal according to claim 1, **characterized in that** the thickness of the slide bearing half shells (5) at the apex towards the tread plate (3) is smaller than 3 mm.

3. The flat bicycle pedal according to claim 1 or 2, **characterized in that** the number of annular projections (8) of the pedal pivot shaft (6) is smaller than or equal to the number of annular grooves (7) formed during assembly of the slide bearing half shells (5).

4. The flat bicycle pedal according to claim 1 to 3, **characterized in that** the slide bearing half shells (5) are closed at the pedal exterior.

5. The flat bicycle pedal according to claim 1 to 4, **characterized in that** the slide bearing half shells (5) are manufactured from a bearing material which is different from the material of the honeycomb-shaped structure (4) or manufactured from the same material but comprise an additional coating of the bearing.

6. The flat bicycle pedal according to claim 1 to 5, **characterized in that** the diameter of the annular projections (8) of the pedal pivot shaft (6) is smaller than or equal to the diameter of the pedal pivot shaft (6) or smaller than or equal to the distance between the tread plates (3).

7. The flat bicycle pedal according to claim 1 to 6, **characterized in that** the annular projections (8) of the pedal pivot shaft (6) are positioned on the end portion of the pedal pivot shaft (6), which is positioned inside the pedal.

8. The flat bicycle pedal according to claim 1 to 7, **characterized in that** at least one annular projection (8), preferably the outer annular projection is constituted by a ball bearing, which is rigidly connected to the pedal pivot shaft (6).

9. The flat bicycle pedal according to claim 1 to 8, **characterized in that** the slide bearing half shells (5) comprise a groove-shaped recess (9) for receiving a seal ring (10) at the position where the pedal pivot shaft (6) emerges from the pedal.

10. The flat bicycle pedal according to claim 1 to 9, **characterized in that** the honeycomb-shaped structure (4) is constituted by adjoining bodies (11) which preferably have a hexagonal cross-section.

11. The flat bicycle pedal according to claim 1 to 9, **characterized in that** the bodies (11) constituting the honeycomb-shaped structure (4) are frustums of cones, frustums of pyramids, or cylinders.

12. The flat bicycle pedal according to claim 1 to 11, **characterized in that** the bodies (11) constituting the honeycomb-shaped structure (4) are at least partially hollow bodies.

13. The flat bicycle pedal according to claim 1 to 12, **characterized in that** the assembled half shells (1,2) are framed by a circumferential edge protection (12) comprising an opening for the pedal pivot shaft (6), preferably a slot (15).

14. The flat bicycle pedal according to claim 1 to 13, **characterized in that** the half shells (1,2), which are connectable to constitute a pedal, comprise an offset stacking with respect to each other, such that the surface linear the pedal after assembly is parallelogram-shaped in a plane which is perpendicular to the pedal pivot shaft (6).

15. The flat bicycle pedal according to claim 1 to 14, **characterized in that** the bicycle pedal comprises aligned breaches through the half shells (1,2), preferably one on each side of the pedal pivot shaft.

## Revendications

1. Pédale de bicyclette plate composée de deux demi-coques (1, 2) raccordées l'une à l'autre et d'un axe de pédale (6), chaque demi-coque (1, 2) se composant d'une plaque d'appui (3) et d'une structure (4) raccordée de façon fixe à la plaque d'appui (3) respective, les structures (4) étant juxtaposées dans l'état monté, chacune des demi-coques (1, 2) présentant dans la structure (4) une demi-coque de palier lisse (5) pour l'axe de pédale (6), et une rainure (7) de forme semi-circulaire étant disposée dans chaque demi-coque de palier lisse (5) pour recevoir une nervure annulaire (8) de l'axe de pédale (6), **caractérisée en ce que**
la structure (4) est constituée en nid d'abeilles et **en ce que**, dans chaque demi-coque de palier lisse (5), il est disposé au moins deux rainures (7) de forme semi-circulaire pour recevoir des nervures annulaires (8) de l'axe de pédale (6).

2. Pédale de bicyclette plate selon la revendication 1, **caractérisée en ce que** l'épaisseur des demi-coques de palier lisse (5) au sommet vers la plaque d'appui (3) est inférieure à 3 mm.

3. Pédale de bicyclette plate selon la revendication 1 ou 2, **caractérisée en ce que** le nombre de nervures annulaires (8) de l'axe de pédale (6) est inférieur ou égal au nombre de rainures (7) annulaires apparaissant lors de l'assemblage des demi-coques de palier lisse (5).

4. Pédale de bicyclette plate selon l'une des revendications 1 à 3, **caractérisée en ce que** les demi-coques de palier lisse (5) sont fermées côté extérieur de pédale.

5. Pédale de bicyclette plate selon l'une des revendications 1 à 4, **caractérisée en ce que** les demi-coques de palier lisse (5) sont fabriquées à partir d'un matériau de palier différent de la structure (4) en nid d'abeilles ou bien à partir du même matériau mais avec un revêtement de palier supplémentaire.

6. Pédale de bicyclette plate selon l'une des revendications 1 à 5, **caractérisée en ce que** le diamètre des nervures annulaires (8) de l'axe de pédale (6) est inférieur ou égal au diamètre de l'axe de pédale (6) ou inférieur ou égal à l'écart entre les plaques d'appui (3).

7. Pédale de bicyclette plate selon l'une des revendications 1 à 6, **caractérisée en ce que** les nervures annulaires (8) de l'axe de pédale (6) sont disposées sur la zone extrême de l'axe de pédale (6) située dans la pédale.

8. Pédale de bicyclette plate selon l'une des revendications 1 à 7, **caractérisée en ce qu'**au moins une nervure annulaire (8), de préférence la nervure annulaire extérieure. est formée par un roulement à billes raccordé de façon fixe à l'axe de pédale (6).

9. Pédale de bicyclette plate selon l'une des revendications 1 à 8, **caractérisée en ce que** les demi-coques de palier lisse (5) présentent, dans la zone de sortie de l'axe de pédale (6) à partir de la pédale, un creux (9) en forme de rainure pour recevoir une bague étanchéité (10).

10. Pédale de bicyclette plate selon l'une des revendications 1 à 9, **caractérisée en ce que** la structure (4) en nid d'abeilles est formée de corps (11) juxtaposés avec une section transversale de préférence hexagonale.

11. Pédale de bicyclette plate selon l'une des revendications 1 à 9, **caractérisée en ce que** les corps (11) formant la structure (4) en nid d'abeilles sont des cônes tronqués, des pyramides tronquées ou des cylindres.

12. Pédale de bicyclette plate selon l'une des revendications 1 à 11, **caractérisée en ce que** les corps (11) formant la structure (4) en nid d'abeilles sont au moins partiellement des corps creux.

13. Pédale de bicyclette plate selon l'une des revendications 1 à 12, **caractérisée en ce que** les demi-coques (1, 2) composées sont encadrées par une protection d'arête (12) périphérique, cette protection présentant une ouverture pour l'axe de pédale (6), de préférence une fente (15).

14. Pédale de bicyclette plate selon l'une des revendications 1 à 13, **caractérisée en ce que** les demi-coques (1, 2) pouvant être assemblées pour former une pédale présentent un décalage de position l'une par rapport à l'autre de telle sorte que, après le montage, la génératrice de la pédale présente la forme d'un parallélogramme dans un plan vertical par rapport à l'axe de pédale (6).

15. Pédale de bicyclette plate selon l'une des revendications 1 à 14, **caractérisée en ce que** la pédale de bicyclette présente des percements en affleurement à travers les demi-coques (1, 2), de préférence un sur chaque côté d'axe de pédale.
